# EUROPEAN PATENT APPLICATION

(11) **EP 2 849 056 A1**
(43) Date of publication of application: **18.03.2015**
(21) Application number: 13184030.8
(22) Date of filing: 12.09.2013
(51) Int. Cl.: G06F 9/00, H04N 5/262

(54) **Video processing system**

(71) Applicant: LYNX Technik AG, 64331 Weiterstadt (DE)
(72) Inventor: Urvoy, Carole, 64289 Darmstadt (DE); Dose, Frances, 64295 Darmstadt (DE); Schmidt, H. Henning, 64347 Griesheim (DE); Merchant, James F., 65185 Wiesbaden (DE)
(74) Representative: Weilnau, Carsten

(57) **Abstract**

The present invention relates to a video processing system, to a method of controlling a video processing system and to a computer program for controlling such system, the video processing system comprises:
- a processing device (20) having at least a first processing unit (22) and a second processing unit (24) that are interconnected via at least one signal line (23),
- a control module (30) coupled to the processing device (20) to configure at least one of the processing units (22, 24),
- a graphical user interface (40) to provide a visual representation of the processing device (20) with its at least two processing units (22, 24), and
- an input module (50) connected to the control module (30) to process a user input, characterized in that
- at least the first and the second processing unit (22, 24) are each assigned with a display identifier (a, b, c), wherein the graphical user interface (40) is adapted to scale the visual representation of the processing device (20) in response to a user's zoom level input (A, B, C) and is further adapted to selectively conceal or reveal at least one of the processing units (22, 24) depending on of the display identifier (a, b, c) assigned to the respective processing unit (22, 24) and depending on the zoom level input (A, B, C).

## Description

### Field of the invention

The present invention relates to the field of signal processing, in particular to the field of video signal processing. The invention relates to a video processing system, and method of controlling a video processing system as well as to a respective computer program.

### Background

Video signal processing systems as they are used by stationary and mobile broadcasting stations, typically in the field of television broadcasting, have a rather complex internal structure, wherein a multitude of various processing units are interconnected and configured. Depending on the number of video channels and audio channels conversion, embedding, de-embedding, synchronization and/or multiplexing of respective video and/or audio signals requires a rather complex architecture of various processing units that may provide up/down conversion, cross-conversion, noise reduction, detail enhancement, color correction, general audio processing as well as various types of embedding and de-embedding and further signal processing steps.

Especially with digital video processing systems the various processing units may be electronically configured and controlled. Due to the vast amount of processing units, signal lines interconnecting the processing units as well as the multitude of configuration options, a remote or electronically based controlling and configuring of such video processing systems is rather elaborate, cumbersome and therefore rather time- and cost-intensive.

Moreover, if a video processing system has various processing units, their configuration might be somewhat confusing and their visual representation may even lead to misconfigurations.

It is therefore an object of the present invention to provide a video processing system, a method of controlling such a video processing system as well as a respective computer program that provide a rather intuitive, fast, easy and less error-prone configuration and handling.

### Summary of the invention

In this regard the present invention relates to a video processing system that comprises a processing device having at least a first processing unit and a second processing unit. First and second processing units are typically interconnected via at least one signal line. The video processing system further comprises a control module coupled to the processing device to configure said processing device, i.e. to configure at least one of the processing units. Instead or additionally, the control module may also be coupled to the processing device in order to configure the at least one signal line interconnecting the first and the second processing unit thereof.

The processing system also comprises a graphical user interface to provide a visual representation of the processing device with its at least two processing units. Typically, the visual representation provided by the graphical user interface also includes at least one signal line in order to visualize the mutual interconnection between at least the first and second processing units.

Additionally, the video processing system comprises an input module which is connected to the control module in order to process a user input. The input module may also be coupled with the graphical user interface or may even be represented by the graphical user interface. In the latter case, the graphical user interface may comprise a touch screen, thereby combining a graphic display and an input module.

At least the first and the second processing units are each assigned with a display identifier. Moreover, the graphical user interface is adapted to scale the visual representation of the processing device in response to a user's zoom level input. Hence, the graphical user interface is adapted to vary the size of symbols representing first and second processing units and/or the signal line in response to a respective user input. Accordingly, a user may specify a particular zoom level which is processed by the input module and the graphical user interface, thereby illustrating the visual representation of the processing device and its various components with variable size on the graphical user interface.

Moreover, the graphical user interface is further adapted to selectively conceal or reveal at least one of the processing units depending on the display identifier and depending on the selected zoom level input of the user.

In this way, selected processing units only show up on the graphical user interface if their display identifier matches with the actually selected zoom level input. Depending on the zoom level and the size of the representation of the processing units, selected processing units can be concealed or revealed.

In particular, with a rather large zoom level, whereby a processing unit generally appears rather large on the graphical user interface, the particular processing unit or various other processing units in the direct vicinity thereto may appear on the graphical user interface. Whereas, by selecting a rather low zoom level, which coincides with a miniaturization of the visual representation of the processing device, respective processing units will be concealed on the graphical user interface. In this way, a rather clear and lucid visual representation of the processing device can be presented on the graphical user interface. On demand and by selecting a respective zoom level particular portions of the visual representation of the processing device may be enlarged and scaled, thereby revealing more and more details.

By assigning the processing units with various different display identifiers, a hierarchy of processing units can be established by way of which the concealing of particular processing units can be controlled in dependence of a selected zoom level, hence depending on the zoom level.

Naturally and when a particular zoom level has been selected, the entire visual representation of the processing device may no longer fit on the graphical user interface. The graphical user interface then provides scroll bars or some other comparable means allowing to shift the visual representation across the screen of the graphical user interface.

According to an embodiment, the graphical user interface is scalable continuously or in discrete steps via the input module and in accordance with the user's zoom level input. A continuous or a discrete scaling or zoom function of the graphical user interface may be implemented either with a particular time delay or even almost spontaneously, the latter of which serves to improve a rather intuitive handling of the video processing system.

According to a further embodiment, the at least one signal line is also assigned with the display identifier to selectively conceal or reveal a respective signal line depending on the user's zoom level input. In particular, first and second processing units may be interconnected by a plurality of signal lines, which are represented in the visual representation of the graphical user interface as parallel lines. Switching to a rather low zoom level, the plurality of signal lines may reduce to a single representative signal line, just indicating or illustrating, that first and second processing units are somehow connected.

On request, a user may just select the respective signal line and may increase the zoom level, thereby revealing the multitude of signal lines interconnecting first and second processing units.

Moreover, the processing units as well as the signal lines may provide various configuration options by way of which the operation and signal processing provided by the processing units and the signal lines can be modified. It is also of particular benefit, when according to a further embodiment the at least one configuration option of at least one of the processing units or of a signal line are each assigned with the display identifier to selectively conceal or reveal a configuration option depending on the user's zoom level input.

This zoom function to selectively hide and conceal various configuration options of processing units or signal lines is of particular benefit to provide a clear overview of the general architecture of the processing device on the graphical user interface.

In a further embodiment, the configuration of a processing unit and/or of a signal line is actually deactivated when the respective processing unit or the respective signal line is concealed and is hence not visible on the graphical user interface. In this way, the video processing system provides an effective and intuitive protection against unintentional manipulation or configuration of processing units or signal lines.

Typically, the configuration options of processing units and/or signal lines are only and exclusively visualized on the graphical user interface when a rather large zoom level is selected by the user. In this way, the overall size of the configuration options can be enlarged as to facilitate a respective configuration action to be executed by the provided configuration option or function.

Moreover and according to a further embodiment at least one of the processing units can comprise at least one sub-processing unit assigned with a display identifier to selectively conceal or reveal the sub-processing unit depending on the user's zoom level input. In this way, also the internal functionality and signal processing paths of processing units can be revealed and illustrated on demand. Various processing units may be grouped together to form a logical processing module, which may be graphically represented in a similar way as the processing units but which may be assigned with a different display identifier.

Depending on the functionality and their intended use within the processing device various processing units may be grouped together to form a logical processing module, which may form the only graphically illustrated representative of its processing units when a rather low zoom level has been selected. Selection of a logical processing module or selection of a larger zoom level may then reveal the internal structure of such a logical processing module with its various processing units.

Increasing a zoom level even further may even reveal various configuration options of a processing unit and eventual sub-processing units contained in the selected processing unit or logical processing module. Also the sub-processing units may, in a further zoom level, reveal various configuration options or even further sub-sub processing units and so on.

There is generally no limitation regarding the number of zoom levels. In this way, a complete local or even global system architecture of a single or even of various remotely located video processing systems may be illustrated on a single graphical user interface.

According to a further embodiment, the graphical user interface and the input module are interconnected to provide a visual selection of a processing unit and/or of a signal line. In response to such a selection, the graphical user interface is adapted to visually highlight a signal processing path to which the selected processing unit or to which the selected signal line belongs. In this way, a rather intuitive and easy approach to visualize signal processing paths within the video processing system is provided.

By such a highlighting selection, the internal signal processing of the processing device can be graphically illustrated in a rather intuitive way. A user may easily check, whether a particular input signal will be processed and received by a processing unit. Moreover, since the path highlighting is typically implemented in a bidirectional way also selection of e.g. an output signal line may instantaneously and directly reveal the processing units as well as various input lines from which a respective output signal is derived.

According to another embodiment, the display identifiers are either statically or dynamically assigned to the processing units, at least one signal line, the configuration option and/or the sub-processing units. Typically, the processing units, signal lines, their configuration options as well as sub-processing units may be assigned with a particular display identifier per default. However and according to various different application purposes or preferences of a user, the display identifiers may be individually modified by the user himself. In this way, the display identifiers may be dynamically assigned to the various components of the processing device, thereby allowing reconfiguration of the zoom- and scaling-behavior of the graphical user interface.

In another aspect the invention also relates to a method of controlling a video processing system as described above. The method comprises the steps of assigning at least the first and the second processing unit with a display identifier, scaling of the visual representation of the processing device on the graphical user interface in response to a user's zoom level input and selectively concealing or revealing at least one of the processing units depending on the zoom level input and depending on of the display identifier assigned to the respective processing unit.

It is generally to be noted here, that the method of controlling the video processing system is directly correlated to the video processing system as described above. Consequently, any features, effects and benefits as described above in connection with the video processing system are equally valid and disclosed herein for the method of controlling said video system; and vice versa.

By means of selectively concealing and/or revealing at least one of the processing units and/or of a particular configuration option, the visual representation of the processing device becomes rather clear and lucid. Manipulation of revealed configuration options is therefore simplified and will lead to a faster and more intuitive overall controlling and configuring of the video processing system.

According to another embodiment, the user's zoom level input is compared with the display identifiers of the processing units. Based on this comparison, a processing unit is concealed when the selected zoom level input is lower than the display identifier of the processing unit. Both, the display identifiers as well as the zoom level input may range from maximum to minimum values according to a predefined scale. The scales of the zoom level input and the display identifiers may be substantially identical, so that a direct mapping and comparison between zoom level input and display identifiers can be conducted. However, it is also conceivable, that the number of display identifiers and zoom levels differs so that some kind of interpolation or extrapolation is applied when comparing the user's zoom level input with the display identifiers.

In another embodiment the user's zoom level input is compared with the display identifiers of the processing units. Then, a processing unit will be revealed when the selected zoom level input is larger than or equal to the display identifier of the processing unit. Given that a particular processing unit is assigned with a display identifier 'b', it remains concealed as long as the selected zoom level equals 'A'. If a higher zoom level, such like level 'B' is selected, the respective processing unit will be revealed on the graphical user interface. Selection of an even higher zoom level, for instance 'C' may then additionally reveal such processing units, signal lines or configuration options that are assigned with a corresponding display identifier 'c'.

Generally, the comparison between zoom levels selected by the user and display identifier is by no way limited to the display identifiers of the processing units only. Said comparison is generally applicable to all components of the processing device that are assigned with any kind of display identifier, such like configuration options of various processing units or signal lines.

According to another embodiment, a sub-processing unit, a signal line and/or a configuration option of a processing unit are visualized in response to a selection executed by the user. With this embodiment it is conceivable, that a user just selects a component of the processing device, such as a processing unit or a signal line which is actually visible on the graphical user interface. Upon selection of the signal line or of the processing unit, configuration options, sub-processing units or sub-signal lines will be at least temporarily represented on the graphical user interface. This revealing of additional components or functions may even occur without selecting of a different zoom level. In this way, a localized zoom function triggered by selection of a graphical representation of a component of the processing device can be provided at least temporarily.

Generally, selection of items presented on a graphical user interface may be conducted by means of a computer mouse and by a selection action, that may be triggered e.g. by a mouse click. Such action may also be conducted by means of touching of a touch screen. Switching to different zoom levels may be attained by making use of particular zoom input devices, such like a scroll wheel of a computer mouse, by means of particular keys of a keyboard, or by means of conducting a predefined movement of at least two fingers on a touch screen. Entering and processing of commands may be executed and provided by the input module, which may comprise a computer mouse, a touch screen, a keyboard or combinations thereof.

In a further embodiment, a configuration option is represented on the graphical user interface in form of a regulator whose size is scaled in accordance with the selected zoom level input. In this way and depending on the selected zoom level input, the graphical representation of the regulator may vary in size. The configuration option may be illustrated on the graphical user interface, e.g. in form of a twistable or shiftable regulator, in form of a knob or similar. By varying the size of the graphical representation of a regulator, a rather precise and graphically supported modification of the respective configuration option can be provided. Additionally it is conceivable, that the user may simply use a keyboard or some other number entering graphical representation on a touch screen to directly enter certain parameter values in order to configure a respective processing unit.

In a further aspect the invention also relates to a computer program for controlling a video processing system as described above. The computer program is typically implementable in the control module or in the graphical user interface of the video processing system. The computer program provides the possibility and comprises program means to assign at least the first and the second processing unit with a display identifier, program means to scale the visual representation of the processing device on the graphical user interface in response to a user's zoom level input and program means to selectively conceal or reveal at least one of the processing units depending on the zoom level input and depending on the display identifier assigned to the respective processing unit.

It is generally to be noted here, that said computer program is directly correlated to the video processing system and the method of controlling such a system as described above. Consequently, any features, effects and benefits as described above in connection with the video processing system and the method are equally valid and disclosed also for the present computer program; and vice versa.

It is further to be mentioned in this context, that the division of the video processing system into a processing device, a control module, a graphical user interface and an input module may be changed arbitrarily, depending on the hardware and software implementation of the video processing system. Typically, the processing device with first and second processing units represents various hardware components that are electronically controlled by the control module. The control module may also comprise a piece of hardware but may be also realized by a processing unit of a computer. Moreover, the functions of the control module as well as the functions of some or even several processing units may also be purely implemented by software.

In general, the division and definition of various processing units of the processing device may be directly correlated to different hardware components that are physically interconnected by means of the at least one signal line. Alternatively, the various processing units and signal lines may represent logical devices implemented by a common hardware component.

### Brief description of the drawings

In the following, various features, effects and beneficial aspects of an exemplary embodiment of the present invention will be illustrated by making reference to the drawings, in which:
- Fig.1: schematically shows a block diagram of the video processing system,
- Fig. 2: schematically depicts the visual representation of the processing device on the graphical user interface with a rather low zoom level A,
- Fig. 3: shows the graphical user interface according to Fig. 2 at an intermediate zoom level B and
- Fig. 4: shows the graphical user interface with a high zoom level C,
- Fig. 5: shows another section of the visual representation of the processing device in a rather low zoom level A and
- Fig. 6: shows the section according to Fig. 5 at a larger zoom level B,
- Fig. 7: shows a first path highlighting in response to a selection of an output line,
- Fig. 8: schematically depicts a second path highlighting in response to a selection of an input signal line,
- Fig. 9: shows the first path highlighting according to Fig. 7 at an increased zoom level B, and
- Fig. 10: shows a flowchart of the method of controlling the video processing system.

### Detailed Description

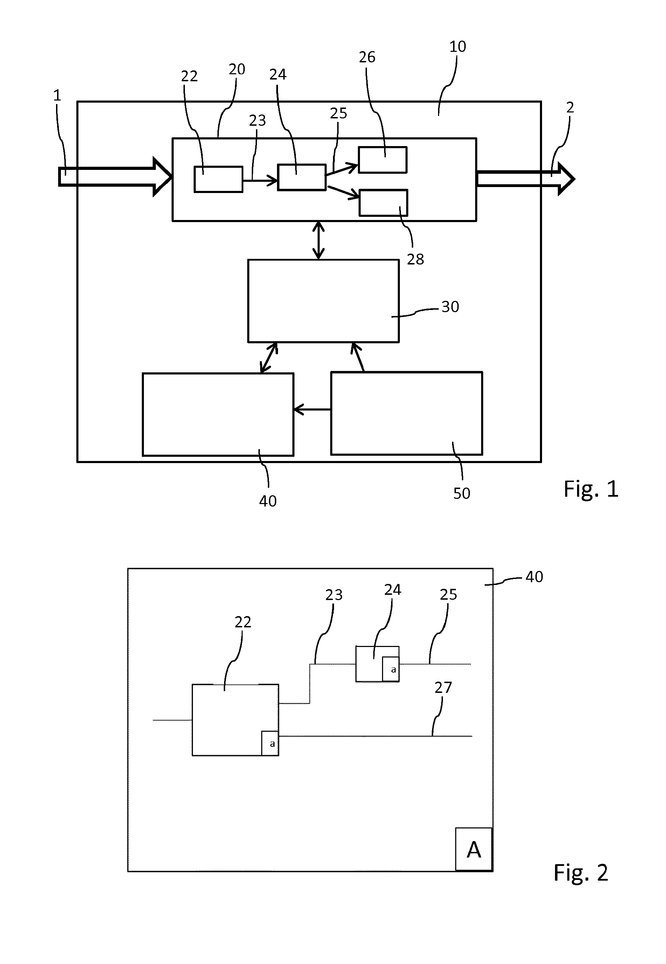

The video signal processing system 10 according to Fig. 1 comprises a processing device 20 featuring various processing units 22, 24, 26, 28. An input stream 1 present at an input of the processing device 20 is processed in a predefined way and will be provided as an output stream 2 at the output of the processing device 20. The video processing system 10 further comprises a control module 30 that interacts with the processing device 20 to configure the processing device 20, hence at least one of its processing units 22, 24, 26, 28.

Additionally the video processing system 10 also comprises a graphical user interface 40, which may be simply provided by a monitor, by a two-dimensional or even three-dimensional display. The graphical user interface 40 serves to provide a visual representation of the processing device 20 with its various processing units 22, 24, 26, 28. Typically, the graphical user interface 40 also shows the interconnection and interaction between the various processing units 22, 24, 26, 28 by visualizing respective signal lines 23, 25 interconnecting the various processing devices 22, 24, 26, 28.

Additionally there is also provided an input module 50 which is connected to the control module 30 to process a user input. The input module 50 may even be directly connected to the graphical user interface 40. It is also conceivable, that the function of the input module 50 is completely provided by the graphical user interface 40, especially when the graphical user interface 40 is implemented as a touch screen. The present illustration of the video processing system 10 and of its visual representation by means of the graphical user interface 40 is only exemplary and does not particularly specify the concrete function of the processing units 22, 24, 26, 28 and their interaction.

Generally, the processing units 22, 24, 26, 28 may be implemented as up/down/cross-converters providing various standard video output formats, such like 625 (4:3), 625 (16:9), 720p25, 720p50, 1080i50, 1080p25, 1080p50. Typically, when implemented as a respective converter, the respective processing unit may provide various conversion modes, such like Pillarbox 4:3, Letterbox 16:9, Center Cut, 14:9 Conversion, Stretch to Fill, or other configuration options, such like activated or deactivated motion adaptive conversion. The processing units 22, 24, 26, 28 may also provide noise reduction, detail enhancement, color correction or audio processing as it is widely known in the state of the art.

In Fig. 2 a rather low zoom level A of the graphical user interface 40 is illustrated. There, only two processing units 22, 24 interconnected by a single signal line 23 are illustrated. In this embodiment, the processing units 22, 24 as well as the signal line 23 are assigned with a display identifier a.

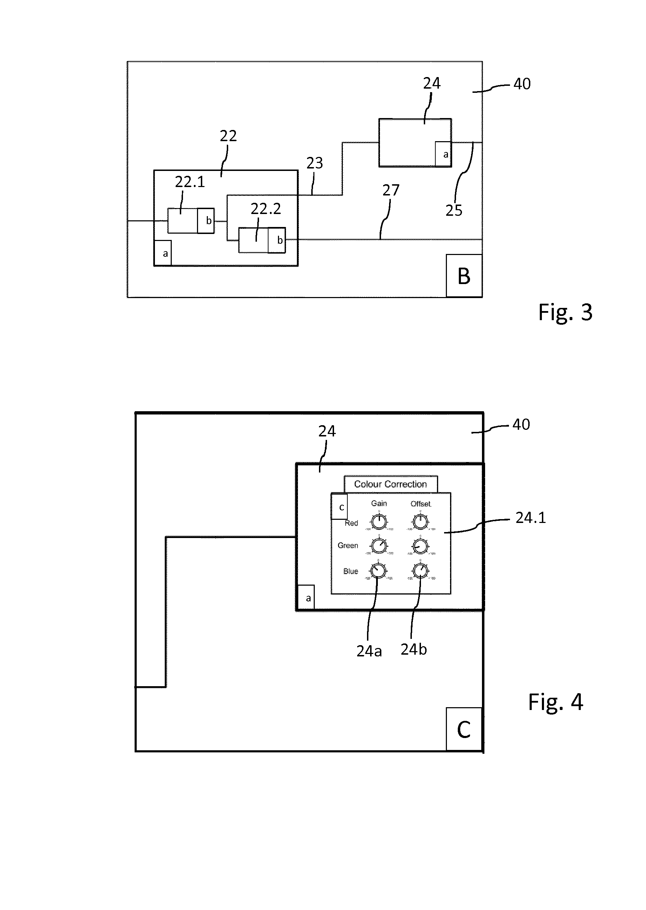

Selection of a larger zoom level B leads to the enlarged visual representation of the graphical user interface 40 as illustrated in Fig. 3. Not only the processing units 22, 24 appear somewhat larger on the screen of the graphical user interface 40 but also the internal structure of the processing unit 22 is now illustrated. As shown in Fig. 3, the first processing unit 22 comprises two sub-processing units 22.1, 22.2. In this particular embodiment, the two sub-processing units 22.1, 22.2 are both assigned with a display identifier b. Additionally, also a signal line interconnecting the two sub-processing units 22.1, 22.2 is illustrated in the selected zoom level.

In the visual representation according to Fig. 4, the zoom level has been increased further to zoom level C. Here, the focus of the graphical user interface 40 has been further moved to the second processing unit 24, which now reveals various configuration options 24a, 24b of a further sub-processing unit 24.1. The sub-processing unit 24.1 is for instance implemented as a color correction module. It provides various visual representations of regulators to modify the red, green and blue color components of a video signal.

The sub-processing input 24.1 is assigned with a display identifier c, presently matching with the zoom level C. In the highest zoom level C all processing devices 22, 24, signal lines 23 and sub-processing units 22.1, 22.2, 24. 1 as well as configuration options 24a, 24b are visually represented on the graphical user interface. Returning to a lower zoom level B will then lead to a hiding of all those components of the processing device 20 that are assigned with a display identifier c or higher, i.e. with display identifiers d, e, and so on.

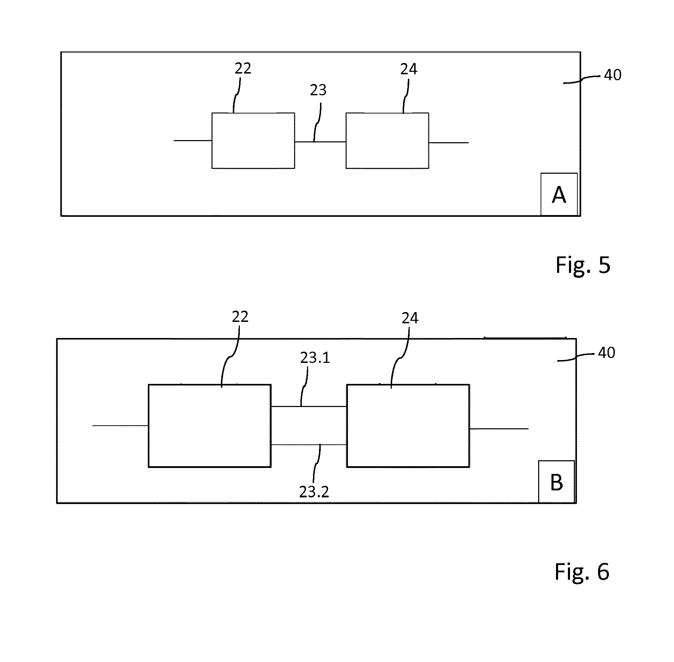

In Figs. 5 and 6, the zoom-level-dependent resolution and illustration of signal lines 23 between first and second processing units 22, 24 is illustrated. In a rather low zoom level A as illustrated in Fig. 5, the two processing units 22, 24 seem to be interconnected by means of only one signal line 23. However, selecting of a higher zoom level B reveals that the signal line 23 actually comprises or consists of various sub-signal lines 23.1, 23.2. If the signal line 23 for instance represents an audio signal line, the representation according to Fig. 6 reveals the left and right channels 23.1 and 23.2 of the stereo-type signal line 23.

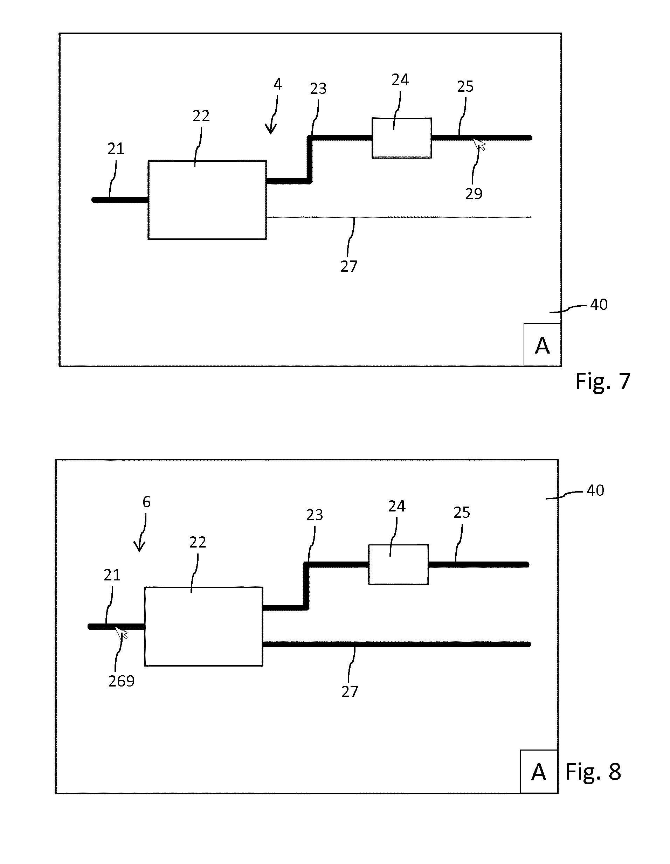

In Fig. 7, a similar zoom level and configuration as already shown in Fig. 2 is illustrated. Additionally, a mouse pointer 29 is shown, which coincides with a signal line 25 downstream of the second processing unit 24. By means of the mouse pointer 29, said particular signal line can be selected for the purpose of a signal processing path highlighting. Consequently and as illustrated in Fig. 7, a processing path 4 to which the selected signal line 25 belongs is visually highlighted. As indicated in Fig. 7, at least the signal lines 23 upstream of the signal line 25 are visually highlighted.

Additional to a visual highlighting of various signal lines it is also conceivable that the processing units 22, 24 located between and interconnected by said signal lines 21, 23, 25 are also highlighted.

In Fig. 8, a different scenario is illustrated, wherein the mouse pointer 29 coincides with and therefore selects an input signal line 21 upstream of the first processing unit 22. As a consequence, all signal lines 23, 25, 27 downstream of the first processing unit 22 are highlighted in order to visualize a respective signal processing path 6.

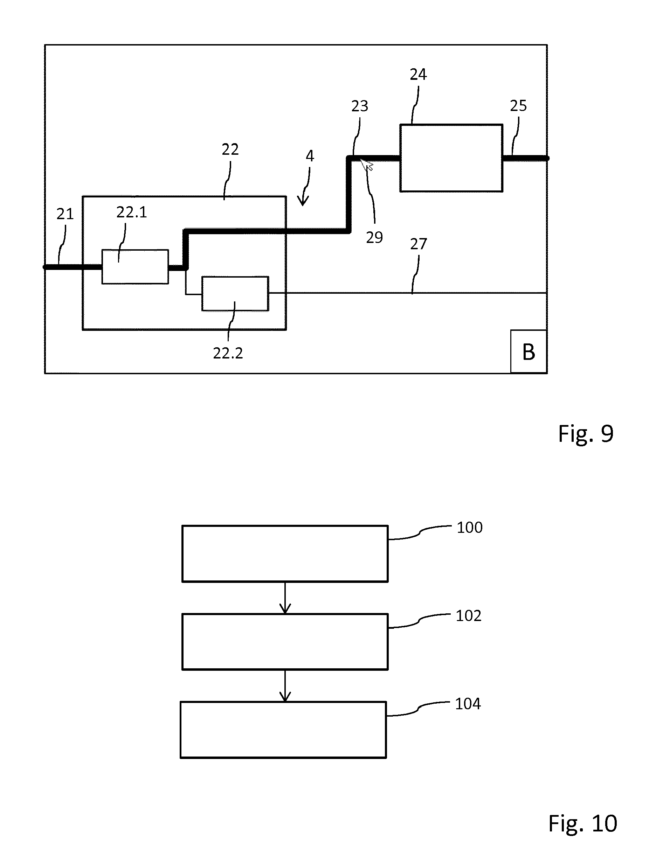

The visual representation according to Fig. 9 just resembles the configuration according to Fig. 7 with the exception, that the zoom level has been increased from level A to B. Consequently, the highlighting of the signal processing path 4 also includes those sections of e.g. the signal line 23 that are located inside the processing unit 22.

Finally, the flowchart according to Fig. 10 just schematically illustrates the various process steps of the method of controlling the video processing system 10. In a first step 100 at least the first and the second processing units 22, 24 are assigned with a display identifier, e.g. with identifiers a, b, c or with even further display identifiers. In a subsequent step 102 the visual representation of the processing device 20 on the graphical user interface 40 is scaled in response to a user's zoom level input A, B or C. In the illustrated embodiment, the display identifiers a, b, c directly match with the zoom levels A, B, C.

If for instance zoom level A is selected only those processing units or other components of the processing device 20 assigned with the display identifier a will be represented and illustrated on the graphical user interface 40. Selection of a higher zoom level, for instance of zoom level C will reveal all those components of the processing device 20 that are assigned with display identifiers a, b or c.

In a further step 104 at least one of the processing units is selectively concealed or revealed depending on the zoom level input A, B, C and depending on the display identifiers a, b, c that are actually assigned to the respective processing unit or to other components of the processing device 20.

### Reference Numerals

- 1: input stream
- 2: output stream
- 4: signal processing path
- 6: signal processing path
- 10: video processing system
- 20: processing device
- 21: signal line
- 22: processing unit
- 22.1: sub-processing unit
- 22.2: sub-processing unit
- 23: signal line
- 23.1: signal line
- 23.2: signal line
- 24: processing unit
- 24.1: sub-processing unit
- 25: signal line
- 26: processing unit
- 27: signal line
- 28: processing unit
- 29: mouse pointer
- 30: control module
- 40: graphical user interface
- 50: input module

## Claims

1. A video processing system, comprising:
- a processing device (20) having at least a first processing unit (22) and a second processing unit (24) that are interconnected via at least one signal line (23),
- a control module (30) coupled to the processing device (20) to configure at least one of the processing units (22, 24),
- a graphical user interface (40) to provide a visual representation of the processing device (20) with its at least two processing units (22, 24), and
- an input module (50) connected to the control module (30) to process a user input, **characterized in that**
- at least the first and the second processing unit (22, 24) are each assigned with a display identifier (a, b, c), wherein the graphical user interface (40) is adapted to scale the visual representation of the processing device (20) in response to a user's zoom level input (A, B, C) and is further adapted to selectively conceal or reveal at least one of the processing units (22, 24) depending on the display identifier (a, b, c) assigned to the respective processing unit (22, 24) and depending on the zoom level input (A, B, C).

2. The video processing system according to claim 1, wherein the graphical user interface (40) is scalable continuously or in discrete steps via the input module (50) in accordance with the user's zoom level input (A, B, C).

3. The video processing system according to any one of the preceding claims, wherein the at least one signal line (23, 23.1, 23.2) is assigned with the display identifier (a, b, c) to selectively conceal or reveal a respective signal line (23, 23.1, 23.2) depending on the user's zoom level input (A, B, C).

4. The video processing system according to any one of the preceding claims, wherein at least one configuration option (24a, 24b) of at least one of the processing units (24) is assigned with the display identifier (a, b, c) to selectively conceal or reveal the configuration option (24a, 24b) depending on the user's zoom level input (A, B, C).

5. The video processing system according to any one of the preceding claims, wherein the configuration of a processing unit (22, 24) and/or of a signal line (23) is deactivated when concealed.

6. The video processing system according to any one of the preceding claims, wherein at least one of the processing units (22) comprises at least one sub-processing unit (22.1, 22.2) assigned with a display identifier (a, b, c) to selectively conceal or reveal the sub-processing unit (22.1, 22.2) depending on the user's zoom level input (A, B, C).

7. The video processing system according to any one of the preceding claims, wherein the graphical user interface (40) and the input module (50) are interconnected to provide a visual selection of a processing unit (22, 24) and/or of a signal line (21, 23, 25), and wherein the graphical user interface (40) in response to a selection is adapted to visually highlight a signal processing path (4, 6) to which the selected processing unit (22, 24) or selected signal line (21, 23, 25) belongs.

8. The video processing system according to any one of the preceding claims, wherein the display identifiers (a, b, c) are statically or dynamically assigned to the processing units (22, 24), to the at least one signal line (23), to the configuration option (24a, 24b) and/or to the sub-processing units (22, 24).

9. A method of controlling a video processing system according to any one of the preceding claims, comprising the steps of:
- assigning at least the first and the second processing unit (22, 24) with a display identifier (a, b, c),
- scaling of the visual representation of the processing device (20) on the graphical user interface (40) in response to a user's zoom level input (A, B, C),
- selectively concealing or revealing at least one of the processing units (22, 24) depending on the zoom level input (A, B, C) and depending on the display identifier (a, b, c) assigned to the respective processing unit (22, 24).

10. The method according to claim 9, wherein the user's zoom level input (A, B, C) is compared with the display identifiers (a, b, c) of the processing units (22, 24) and wherein a processing unit (22, 24) is concealed when the selected zoom level input (A, B, C) is lower than the display identifier (a, b, c) of the processing unit (22, 24).

11. The method according to claim 9 or 10, wherein the user's zoom level input (A, B, C) is compared with the display identifiers (a, b, c) of the processing units (22, 24) and wherein a processing unit (22, 24) is revealed when the selected zoom level input (A, B, C) is larger than or equal to the display identifier (a, b, c) of the processing unit (22, 24).

12. The method according to any one of the preceding claims 9 to 11, wherein a sub-processing unit (22.1, 22.2), a signal line (23, 23.1, 23.2) and/or a configuration option (24a, 24b) of a processing unit (22, 24) is visualized in response to a selection executed by the user.

13. The method according to any one of the preceding claims 9 to 12, wherein a configuration option is represented on the graphical user interface (40) in form of a regulator (24a, 24b) whose size is scaled in accordance with the selected zoom level input (A, B, C).

14. A computer program for controlling of a video processing system according to any one of the preceding claims 1 to 8 and being implementable in the control module (30) thereof, the computer program comprises:
- program means to assign at least the first and the second processing unit (22, 24) with a display identifier (a, b, c),
- program means to scale the visual representation of the processing device (20) on the graphical user interface (40) in response to a user's zoom level input (A, B, C),
- program means to selectively conceal or reveal at least one of the processing units (22, 24) depending on the zoom level input (A, B, C) and depending on the display identifier (a, b, c) assigned to the respective processing unit (22, 24).
